# EUROPEAN PATENT APPLICATION

(11) **EP 4 645 143 A1**
(43) Date of publication of application: **05.11.2025**
(21) Application number: 24175627.9
(22) Date of filing: 14.05.2024
(51) Int. Cl.: G06F 21/62, G06F 21/78

(54) **DATA PROTECTION SYSTEM**

(30) Priority: 02.05.2024 KR 20240058250
(71) Applicant: Woo, Hye Ryun, Seoul (KR)
(72) Inventor: Woo, Hye Ryun, Seoul (KR)
(74) Representative: Jung, Minkyu

(57) **Abstract**

According to exemplary embodiments of the present invention, data protection storage is provided, the storage comprising: a standard network file server receiving a file access request from a user by being communicatively linked with a standard network driver mounted on an operating system of a client terminal; and a data protection processing part allowing a data protection processed file to be provided to the client terminal by data protection processing of a file requested in response to data protection policy set in a policy part when the file access request is received from a file system mapped to storage of the standard network file server.

## Description

### [Technical Field]

The present invention relates to a data protection system, and more particularly to a data protection storage configured to protect from external attacks such as ransomware, data theft and the like.

### [Background of Invention]

The conventional storage technology for preventing ransomware is such that a client program is installed in windows or linux operating system, a ransomware prevention file server demon is installed in a separate file server, and then the ransomware is installed on a PC or server where the client program is installed, and when a file event occurs for a file on a network drive connected to a preventive file server demon, the client program sends the file event to the file server and when the file server delivers the requested file based on the file event, a relevant file is encoded and provided.

However, the abovementioned conventional technology requires a process of installing a separate client program on a PC or server in the aspect of a user, and a burden is generated, in the aspect of service provider, to develop a client program every time for performing the abovementioned functions for each operating system such as windows, Mac and linux and for each operating system version.

### [Description of Invention]

### [Technical Subject]

The present invention has been derived to solve the foregoing problems and it is an object to provide data protection storage to allow data stored in a file server to be safely prepared against malware attacks such as ransomware.

### [Technical Solution]

In one general aspect of the present invention, there may be provided data protection storage, comprising:
a standard network file server receiving a file access request from a user by being communicatively linked with a standard network driver mounted on an operating system of a client terminal; and
a data protection processing part allowing a data protection processed file to be provided to the client terminal by data protection processing of a file requested in response to data protection policy set in a policy part when the file access request is received from a file system mapped to storage of the standard network file server.

Preferably, the standard network file server may transmit, to the file system, the file access event (generation, reading, correction, deletion, moving and the like) based on the file access request received through the standard network driver of the client terminal,
the file system may allow being linked to the data protection processing part by calling a program function determined by the file access event received from the file system, and
the data protection processing part may allow the data protection processing to be implemented on the requested file in response to the data protection policy when the file access event is processed by the called function.

At this time, the file system may not be data storage stored with actual file but a virtual file system or a custom file system.

Preferably, the file system may allow being linked to the data protection processing part by calling the program function determined in response to the file access event including a directory path of a requested file. In this case, the data protection processing part may process the file access event in response to the file protection policy for each directory of called file to allow the data protection process for each directory in response to data protection policy to be implemented on the requested file.

Preferably, the standard network file server may obtain information capable of distinguishing the client terminal having sent the file access event or user account, and send the same to the policy part, and the data protection processing part may confirm, from the policy part, whether the file access event generated at a current time is a file access event requested by the client terminal or user account and allow the data protection process in response to data protection policy for each user to be implemented.

Preferably, the data protection processing part may constitute the custom file system by being functionally and integrally implemented on the file system of kernel space.

In another general aspect of the present invention, there may be provided data protection storage, comprising: a custom network file server communicatively linked with a standard network driver mounted on an operating system of client terminal. Here, the custom network file server may include a file server response part receiving a file access event requested from a user of client terminal by being communicatively linked with the standard network driver, and a data protection processing part for data protection process of requested file in response to data protection policy set in policy part to allow the data protection processed file to be provided to a client terminal.

### [Advantageous Effects of Invention]

The exemplary embodiments of present invention have advantageous effects in that a data protection storage is provided to allow data stored in a file server connected to an operating system to be safely prepared from malware attacks while a standard network driver technology mounted on the operating system is used as is, whereby burdens can be relieved of developing every time a separate client program for each operating system and version thereof for preventing various malware such as ransomware for each operating system.

The exemplary embodiments of present invention have further advantageous effects in that storage space can be saved compared with a method (for example, a method of copying a fake folder or a fake file corresponding to a real folder or file and substituting the same) of using the conventional technology because a fake file is generated in real time to be transmitted only through communication when a file open request comes in.

The exemplary embodiments of present invention still have advantageous effects in that management is easy in the user's point of view, because all files included in a mounted drive are provided at once in fakes, instead of providing fake files for each file or folder, while the conventional technology generates a management burden for setting fakes to be provided for each file or folder.

Furthermore, the exemplary embodiments of present invention still have advantageous effects in that, because fake files are provided through network drive, the exemplary embodiments are safer than a file protection method of operating a virtual file system within a local file system built in PC.

That is, when malware is driven in a PC, it is easy to disable a protection method mounted in the PC, while security is further increased because the network drive method has its determination part on a file server outside of PC.

A higher security effect may be achieved by operating a determination part in a space where PC and medium are separated like IC chip card.

If malware directly attacks a network drive connected to PC via network, the network driver is operated as a part of kernel, such that blue screen is shown or PC OS is stopped, and when OS is dead, malware is also stopped.

### [Brief Description of Drawings]

FIG. 1 is a schematic view for explaining a conventional remote data storage device that is linked to a standard network driver mounted on an operating system of a client terminal.
FIG. 2 is a schematic view for explaining data protection storage linked to a standard network driver mounted on an operating system of a client terminal according to a first exemplary embodiment of present invention.
FIG. 3 is a schematic view for explaining data protection storage linked to a standard network driver mounted on an operating system of a client terminal according to a second exemplary embodiment of present invention.
FIG. 4 is a schematic view for explaining data protection storage linked to a standard network driver mounted on an operating system of a client terminal according to a third exemplary embodiment of present invention.

### [Detailed Description]

The present invention may be applied with various changes and have several exemplary embodiments, where particular exemplary embodiments will be exemplified in the drawings and described in detail through the detailed description of the present invention.

However, it should be understood that the present invention is not limited to particular embodiments, but encompasses all changes, modifications, equivalents and substitutes included within the ideas and technical scopes of the present invention.

In describing the present invention, detailed descriptions of well-known technologies are omitted for brevity and clarity so as not to obscure the description of the present invention with unnecessary detail. It will be understood that, although the numerical terms (e.g., first, second, etc.) may be used herein to describe various elements, these elements should not be limited by these terms. These terms are simply identification symbols only for use to distinguish one element from another.

Furthermore, it should be interpreted across the entire specification that, although when an element is referred to as being "connected to" or "coupled to" another element, it may be directly connected or coupled to the other element, intervening elements may be present therebetween unless otherwise specially mentioned. Furthermore, it should be further understood across the entire specification that the terms "comprises," "comprising," "including," and "having," are inclusive and therefore specify the presence of other elements, but do not preclude the presence or addition of one or more other elements, unless the context clearly indicates otherwise.

Furthermore the terms of "part" of "module" described in the specification means a unit for processing at least one function or operation, which means that it can be implemented by one or more hardware or software, or combination of software and hardware.

Hereinafter, data protection storage for each exemplary embodiment of the present invention will be described in detail with reference to attached drawings.

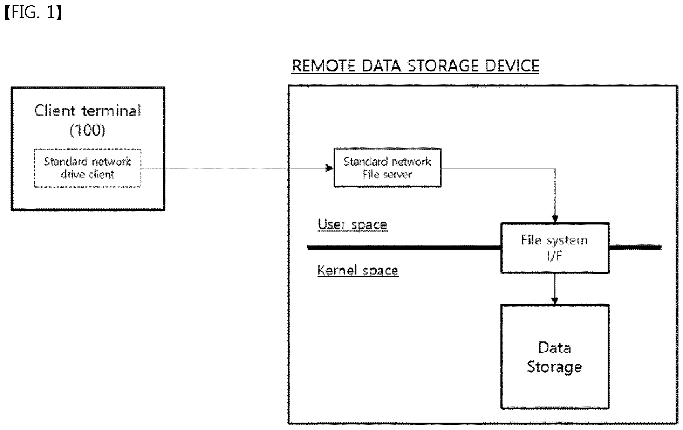

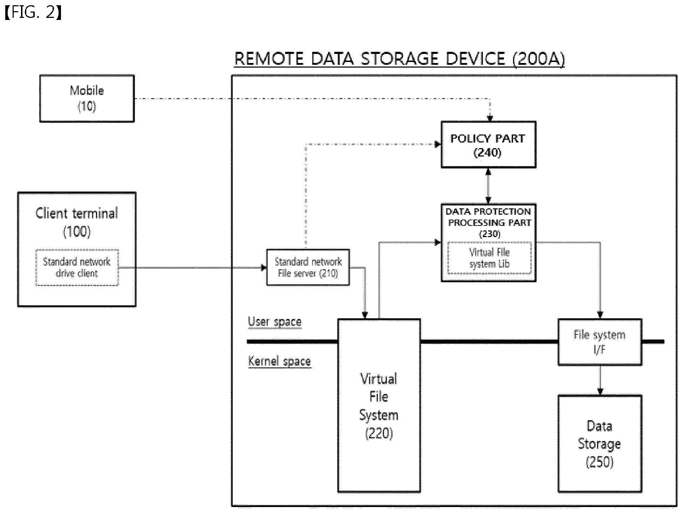

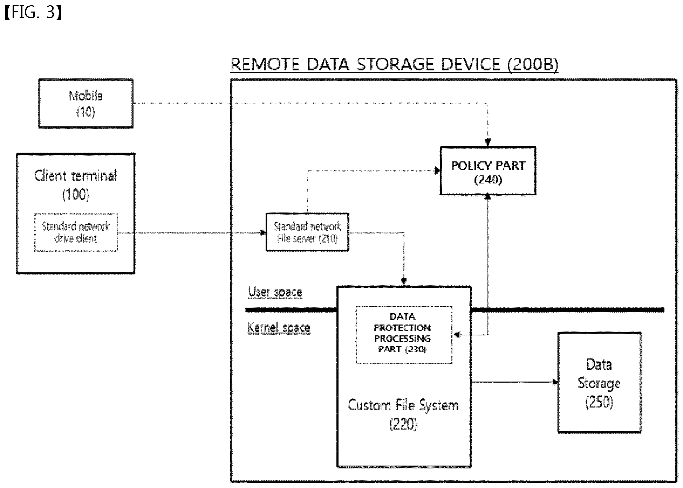

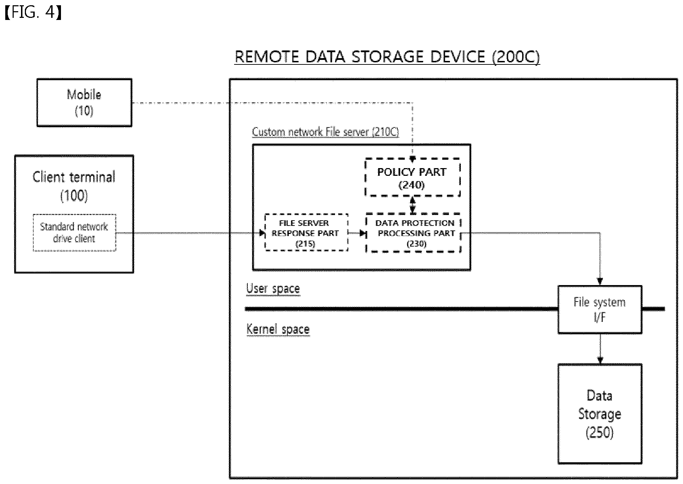

Here, FIG. 1 is a schematic view for explaining a conventional remote data storage device that is linked to a standard network driver mounted on an operating system of a client terminal, FIG. 2 is a schematic view for explaining data protection storage linked to a standard network driver mounted on an operating system of a client terminal according to a first exemplary embodiment of present invention, FIG. 3 is a schematic view for explaining data protection storage linked to a standard network driver mounted on an operating system of a client terminal according to a second exemplary embodiment of present invention, and FIG. 4 is a schematic view for explaining data protection storage linked to a standard network driver mounted on an operating system of a client terminal according to a third exemplary embodiment of present invention.

Hereinafter, based on FIGS. 1 to 4, although a case is exemplified where a folder stored in a remote data storage device is mounted on a client terminal (100) such as a PC, or a notebook, in the network drive form, it should be apparent that the present invention may be applied in the same manner as to a case where the folder stored in the remote data storage device is mounted on a server in a network drive form.

### [FIG. 1 - Conventional network drive mount method]

Referring to FIG. 1, a client terminal (100) may be such that the standard network driver (see 'Standard network drive client' of FIG. 1) built in according to the installed operating system is operated, a standard network file server (see 'Standard network File server' of FIG. 1) that is communicatively linked to standard network driver is installed on the remote data storage device. As a result, the client terminal (100) may be mounted with a network drive.

At this time, the standard network file server may store or read the file through a file system interface (see 'File system I/F' in FIG. 1, generally called file system, and operated by a drive or directory mounted on the operating system) within a remote data storage device. The file system interface may be a data storage (see 'Data Storage'of FIG. 1)operating in kernel space and transmit, a disc I/O based file access request (for example, file generation, file read (open), file writing (change), file copying, file movement), onto the standard network file server driven by a user space.

The standard network file server may obtain a target file which was file-access-requested from the data storage, and may return the obtained target file to the standard network driver of client terminal (100).

### [FIG. 2 -First exemplary embodiment]

Referring to FIG. 2, a data protection storage (20A) according to a first exemplary embodiment of the present invention may be implemented by including a standard network file server (210), a virtual file system (220), a data protection processing part (230) and a policy part (240).

The standard network file server (210), as mentioned in the foregoing, may be communicatively linked to the standard network driver (see 'Standard network drive client'of FIG. 2) mounted on the client terminal (100) to receive a file access event requested from a user.

According to the exemplary embodiment of present invention, the standard network file server (210) may not be directly connected to data storage (250) but may be linked to the data storage (250) via a virtual file system (220) where actual file is stored. Toward this end, in the exemplary embodiment of present invention, the storage used by the standard network file server (210) is mapped to the virtual file system (220) (recognized as a drive or directory by the operating system.

The said virtual file system (220) may be a technology capable of implementing the custom file system drive, may be implemented using File system in User space in unix or linux operating system, and may be implemented by using Callback File system in window operating system, whereby its file system (that is, a virtual file system without providing the general file system by providing a bridge function to the kernel interface) can be made without kernel change in the user program.

In this case, the network drive actually mounted on the client terminal (100) may be a folder or drive of virtual file system (220). As a result, after the virtual file system (220) of file system is mounted using the network drive, and when relevant space receives file I/O requests such read/write and the like, which may be processed by user space program (i.e., data protection processing part (230) to be described later).

The standard network file server (210) may transmit, to the virtual file system (220), the file access event (generation, read, write, deletion, moving, correction and the like) based on file access request received through the standard network driver of client terminal (100). The virtual file system (220) may only perform the calling of user space function (see the Virtual File system Lib of FIG. 2) determined by received file access event, and the actual file access event is processed by the data protection processing part (230) linked to the virtual file system (200) based on function calling.

At this time, the data protection processing part (230) may process the file access event based on the data protection policy set in the policy part (240).

For example, when the data protection policy is in the read-only mode, the data protection processing part (230) may receive target file from data storage (250), change the attributes of target file to read only, and may process in such a manner that the target file changed to read only is returned to a standard network driver of client terminal (100).

As another example, when the data protection policy is in the fake mode, the data protection processing part (230) may generate a fake file instead of requested file itself, where the generated fake file is returned to the standard network driver of client terminal (100). In this case, the fake file may be provided as read only.

Even in the conventional technology, a technology (e.g., Decoy FS (file system of IBM)of providing a fake file has existed. However, when a fake file capable of read/write is provided, a problem is generated where there is no way of preventing an existing file (i.e., original file) existent on relevant file storage path from being tempered because malware encodes and stores the data in fake file. After all, in order to solve the tempering problem of original file, the aforesaid Decoy FS has configured a system where the original file and the fake file are separately stored to allow the original file and the fake file are stored in mutually independent storage space (i.e., mutually separated spaces). Unlike this system, the exemplary embodiment of the present invention is so designed as to prevent fake problem on the original file within a single file system (i.e., without separation of the aforesaid storage space) by providing fake file of read only attributes when the fake file is provided instead of original file.

The data protection policy may be set through ON/OFF of predetermined software switch (not shown) mounted on the data protection storage (200A). It should be apparent that a user may set the data protection policy of policy part (240) using a mobile terminal (see reference numeral 10 of FIG. 2) (software switch method). When the data protection policy is set through ON/OFF of hardware switch, all folders of data storage (250) may be collectively set with the same data protection policy, but when the software switch method is used, the data protection policy may be set differently using each individual and each folder.

When the abovementioned data protection storage (200A) is shared by a plurality of users, the aforementioned data protection policy may be set based on the directory of the requested file.

In this case, the standard network file server (210) may request files including file path on the virtual file system, and the data protection processing part may allow a relevant file access request in response to data protection policy to be processed for each folder or for each directory referring to policy set in the folder included in a relevant file path using the policy part.

Furthermore, when the aforementioned data protection storage (200A) is shared by a plurality of users, the aforementioned data protection policy may be also set not by folder but for each user. In this case, the standard network file server (210) may be so designed as to send, to the policy part (240), the client terminal that has transmitted file access event or information distinguishable of user account (e.g,, user ID, intrinsic value of standard network driver, IP address, communication session value). As a result, the data protection processing part (230) may check, from the policy part (240), whether file access request generated at a current time is related to file access event requested by a user, and may allow a relevant file access request to be processed in response to data protection policy for each user. For example, when user ID is 'Woo' in the data protection policy, policy may be so set as to provide the file as read only, and in case of 'Kim', policy may be so set as to provide the file as read only fake file.

### [FIG. 3 -Second Exemplary Embodiment]

Referring to FIG. 3, the data protection storage (200B) according to the second exemplary embodiment of the present invention may be implemented by including the standard network file server (210), custom file system (220)(which also implement the function of data protection processing part (230)) and policy part (240).

In the case of aforementioned first exemplary embodiment of FIG. 2, the virtual file system (220) may be installed on a kernel space, and the data protection processing part (230) may be separately configured on a user space, whereas the second exemplary embodiment of FIG. 3 may be configured by custom file system (220) where custom file system (220) simultaneously implemented with the function of data protection processing part (230) on the virtual file system of kernel space is configured. Entire network file server policy (or in case of plural users, policy for each folder or policy for each user) transmitted from policy part (240) may so configured as to communicate with custom file system which is kernel level program using Procfs,

According to the second exemplary embodiment of FIG. 3, a direct service process is performed at a kernel terminal compared with the first exemplary embodiment of FIG. 2, such that it has the advantage of speedy processing by reducing unnecessary file access requests and file I/O from kernel mode to user mode.

### [FIG. 4 -Third Exemplary Embodiment]

Referring to FIG. 4, the data protection storage (200C) according to the third exemplary embodiment of present invention may be implemented by including a custom network file server (210C) including file server response part (215)/data protection processing part (230)/policy part (240). At this time, the file server response part (215) may perform the function of standard network file server as in FIGS. 2 and 3.

In case of the third exemplary embodiment of FIG. 4, there is an advantage of quickly reducing the unnecessary file access request and file input/output to a user mode in a kernel mode over the first exemplary embodiment of FIG. 2 by designing the custom network file server (210C) that is added with additional function of the abovementioned data protection processing part and policy part while performing the standard network file server.

While it may be configured as user data protection storage while having a configuration according to the drawing, it may be also configured as user data protection storage by a server manager in the same configuration.

For example, in protecting data file (the file may be regularly generated once for a particular time period, or the file may be irregularly generated by file upload event) by a server manager, the service server may be connected to a data protection storage by a standard network drive, and then, data file may be generated on a relevant drive.

At this time, the data protection storage may provide a read only, or read only fake file for no read, lest the file be changed any more, when a file changeable time or accessible (view and correction) time is reached against an initial file generated time in response to file changeable time setting or view and correctible time setting after generation based on generation of the policy part.

In order to make the initial file generation time unchangeable, time comparison (request time for current file reading, correction, deletion against initial file generation time) based on file request may be implemented by the data protection processing part to permit changeable allowance time if it is changeable permit time, and if it is over the changeable permit time, read only file may be provided to make it impossible to change the file after generation.

Furthermore, in order to make it impossible to access the initial file generation time, time comparison (request time for file reading, correction, deletion against the initial file generation time) based on file request may be implemented by data protection processing part, and if it is changeable permit time, then, the data protection processing part allows the changeable permit time, and if it is over the changeable permit time, view and correction are not permitted in response to the read only fake file.

In addition to a method of comparing a current access time against file generation time, the policy part of server data protection storage, when the file event is received with EOF (End of File), in a situation of a file being generated, this is considered as a final file change impossible state where the data protection processing part is so set as to provide a read only file or a read only fake file.

To this end, when an EOF event occurs in the data protection processing part, in order to store the unchangeable state information of the file, the file attribute value is recorded with the file unchangeable state information and compares the same with the time of requesting the file in the future. It is self-evident that unchangeable state information can be managed by forming a separate DB.

In constituting server data protection storage, and in order to prevent an arbitrary manipulation of stored information by data protection storage manager, data is deleted only when one time password is inputted on the policy part.

The data protection storage according to the exemplary embodiments of the present invention may be implemented in a network storage form so as to be served on cloud basis by installing a separate server, or alternatively, may be manufactured in a portability maximized individual portable storage device (e.g., external USB storage) to implement the abovementioned data protection method.

While the present invention has been described with reference to the exemplary embodiments of the present invention, it should be apparently appreciated to those skilled in the art that embodiments can be variably changed or modified without departing from the scope and spirit of the present invention.

## Claims

1. Data protection storage, comprising:
a standard network file server receiving a file access request from a user by being communicatively linked with a standard network driver mounted on an operating system of a client terminal; and
a data protection processing part allowing a data protection processed file to be provided to the client terminal by data protection processing of a file requested in response to data protection policy set in a policy part when the file access request is received from a file system mapped to storage of the standard network file server.

2. The data protection storage of claim 1, wherein the standard network file server transmits, to the file system, the file access event (generation, reading, correction, deletion, moving and the like) based on the file access request received through the standard network driver of the client terminal,
the file system allows being linked to the data protection processing part by calling a program function determined by the file access event received from the file system, and
the data protection processing part allows the data protection processing to be implemented on the requested file in response to the data protection policy when the file access event is processed by the called function.

3. The data protection storage of claim 2, wherein the file system is not data storage stored with actual file but a virtual file system or a custom file system, and the file system allows being linked to the data protection processing part by calling the program function determined in response to the file access event including a directory path of a requested file.

4. The data protection storage of claim 3, wherein the data protection processing part processes the file access event in response to the file protection policy for each directory of called file to allow the data protection process for each directory in response to data protection policy to be implemented on the requested file.

5. The data protection storage of claim 2, wherein the standard network file server obtains information capable of distinguishing the client terminal having sent the file access event or user account, and sends the same to the policy part, and the data protection processing part confirms, from the policy part, whether the file access event generated at a current time is a file access event requested by the client terminal or user account and allows the data protection process in response to data protection policy for each user to be implemented.

6. The data protection storage of claim 2, wherein the data protection processing part constitutes the custom file system by being functionally and integrally implemented on the file system of kernel space.

7. Data protection storage comprising: a custom network file server communicatively linked with a standard network driver mounted on an operating system of client terminal, wherein the custom network file server includes a file server response part receiving a file access event requested from a user of client terminal by being communicatively linked with the standard network driver, and a data protection processing part for data protection process of requested file in response to data protection policy set in policy part to allow the data protection processed file to be provided to a client terminal.
